# EUROPEAN PATENT APPLICATION

(11) **EP 4 213 524 A1**
(43) Date of publication of application: **19.07.2023**
(21) Application number: 21896538.2
(22) Date of filing: 27.09.2021
(51) Int. Cl.: H04W 12/40

(54) **SYSTEM AND METHOD FOR ACQUIRING VEHICLE INFORMATION, AND VEHICLE**

(30) Priority: 24.11.2020 CN 202011329712
(71) Applicant: Chery Automobile Co., Ltd., Wuhu, Anhui 241006 (CN)
(72) Inventor: ZHOU, Dan, Wuhu, Anhui 241006 (CN); CHEN, Feifeng, Wuhu, Anhui 241006 (CN)
(74) Representative: Yang, Shu
(86) International application number: PCT/CN2021/121007
(87) International publication number: WO 2022/111036

(57) **Abstract**

The present application provides a system and method for acquiring vehicle information, and a vehicle. The system for acquiring vehicle information comprises a mobile terminal module, a central control screen, and a vehicle machine; a two-dimensional code generation tool is provided in the vehicle machine, and the vehicle machine is configured to acquire vehicle information and generate a corresponding two-dimensional code by means of the two-dimensional code generation tool; the central control screen is in communication connection with the vehicle machine, and the central control screen is configured to acquire and display the two-dimensional code; and the mobile terminal module is configured to acquire the vehicle information by scanning the two-dimensional code, and bind the vehicle on the basis of the vehicle information. According to the technical solution provided in the present application, by the mobile terminal module scanning a code, the vehicle information can be acquired simply and quickly, and the vehicle is bound on the basis of the vehicle information, without the need of manually inputting the vehicle information, thus simplifying the user operation, and increasing the efficiency of acquiring the vehicle information, thereby increasing the efficiency of vehicle binding, and improving the user experience.

## Description

### CROSS-REFERENCE TO RELATED APPLICATION

This application claims priority to Chinese Patent Application No. 202011329712.X, filed on November 24, 2020 and entitled "SYSTEM AND METHOD FOR OBTAINING VEHICLE INFORMATION, AND VEHICLE," the disclosure of which is herein incorporated by reference in its entirety.

### TECHNICAL FIELD

The present disclosure relates to the field of vehicle technologies, and in particular, relates to a system and method for acquiring vehicle information, and a vehicle.

### BACKGROUND OF THE INVENTION

With rapid development of automotive electrical appliances and development of Internet of vehicles ecology, more and more automobile manufacturers have their own website, that is, a telematics service provider (TSP) backend. The TSP backend is configured to input and manage various contents and provide data transmission interaction between user equipment and a vehicle, which facilitates the user to acknowledge the vehicle, and improves the dependence of the user on vehicle brand in use.

### SUMMARY OF THE INVENTION

Embodiments of the present disclosure aim to provide a system and method for acquiring vehicle information, and a vehicle to solve a problem of less efficiencies of acquiring vehicle information, inputting information, and binding the vehicle.

In the present disclosure, a system for acquiring vehicle information is provided. The system for acquiring the vehicle information includes: a mobile terminal module, a central control screen, and an in-vehicle infotainment; wherein a two-dimensional code generation tool is provided in the in-vehicle infotainment, and the in-vehicle infotainment is configured to acquire vehicle information and generate a corresponding two-dimensional code using the two-dimensional code generation tool; the central control screen is in communication with the in-vehicle infotainment, and is configured to acquire and display the two-dimensional code; and the mobile terminal module is configured to acquire the vehicle information by scanning the two-dimensional code and bind a vehicle based on the vehicle information.

In some embodiments, the system for acquiring the vehicle information further includes a telematics box TBox module, wherein the vehicle information includes information of the TBox module,
the in-vehicle infotainment is in communication with the TBox module and is configured to acquire the information of the TBox module from the TBox module, wherein the information of the TBox module includes at least one of an integrated circuit card identity ICCID and a serial number SN.

In some embodiments, the vehicle information further includes a vehicle identification number VIN, the system for acquiring the vehicle information further includes a diagnostic apparatus, and the TBox module is in communication with the diagnostic apparatus and is configured to read the VIN from the diagnostic apparatus; or the system for acquiring the vehicle information further includes a manufacturing execution system MES, and the TBox module is in communication with the MES and is configured to read the VIN from the MES; and
the in-vehicle infotainment is further configured to acquire the VIN from the TBox module.

In some embodiments, the TBox module is in communication with the diagnostic apparatus or the MES over a controller area network CAN.

In some embodiments, the in-vehicle infotainment is in communication with the TBox module via a high speed data HSD line, the information of the TBox module is pre-stored in the TBox module, and the TBox module is configured to acquire, in response to a vehicle information request instruction on the central control screen, the information of the TBox module.

In some embodiments, the vehicle information further includes a VIN, and the system for acquiring the vehicle information further includes a diagnostic apparatus, wherein the in-vehicle infotainment is in communication with the diagnostic apparatus and is configured to read the VIN from the diagnostic apparatus.

In some embodiments, the vehicle information further includes a VIN, and the system for acquiring the vehicle information further includes an MES, wherein the in-vehicle infotainment is in communication with the MES and is configured to read the VIN from the MES.

In some embodiments, the central control screen is a touch screen, and is configured to acquire the vehicle information and send the vehicle information to the in-vehicle infotainment.

In some embodiments, the system for acquiring the vehicle information further includes a TBox module, wherein the vehicle information includes information of the TBox module,
the central control screen is in communication with the TBox module and is configured to acquire the information of the TBox module from the TBox module, wherein the information of the TBox module includes at least one of an ICCID and an SN.

In some embodiments, the vehicle information further includes a VIN, the system for acquiring the vehicle information further includes a diagnostic apparatus, and the TBox module is in communication with the diagnostic apparatus and is configured to read the VIN from the diagnostic apparatus; or
the system for acquiring the vehicle information further includes an MES, and the TBox module is in communication with the MES and is configured to read the VIN from the MES; and
the central control screen is further configured to acquire the VIN from the TBox module.

In some embodiments, the vehicle information further includes a VIN, and the system for acquiring the vehicle information further includes a diagnostic apparatus, wherein the central control screen is in communication with the diagnostic apparatus and is configured to read the VIN from the diagnostic apparatus.

In some embodiments, the vehicle information further includes a VIN, and the system for acquiring the vehicle information further includes an MES, wherein the central control screen is in communication with the MES and is configured to read the VIN from the MES.

In some embodiments, the system for acquiring the vehicle information further includes a telematics service provider TSP module, wherein the TSP module is in communication with the central control screen, the in-vehicle infotainment, the TBox module, and the mobile terminal module, and is configured for data transmission interaction between the mobile terminal module and the vehicle.

In some embodiments, the mobile terminal module is a mobile phone or a tablet, applications APP for vehicle management is installed and run on the mobile terminal module, and the mobile terminal module is configured to scan the two-dimensional code through the APP for vehicle management and input the vehicle information.

In the present disclosure, a system for acquiring vehicle information is provided. The system for acquiring the vehicle information includes: a mobile terminal module, a central control screen, an in-vehicle infotainment, and a TBox module. A two-dimensional code generation tool is provided in the in-vehicle infotainment, the in-vehicle infotainment is in communication with the TBox module, and is configured to acquire an ICCID and an SN of the TBox module and VIN information of a vehicle and generate a corresponding two-dimensional code using a two-dimensional code generation tool; the central control screen is in communication with the in-vehicle infotainment, and is configured to display the two-dimensional code; and the mobile terminal module is configured to acquire the ICCID and the SN of the TBox module and the VIN information of the vehicle by scanning the two-dimensional code and bind the vehicle.

In some embodiments, the system for acquiring the vehicle information further includes a diagnostic apparatus, wherein the TBox module is in communication with the diagnostic apparatus and is configured to read the VIN information of the vehicle from the diagnostic apparatus; and/or the system for acquiring the vehicle information further includes an MES, wherein the TBox module is in communication with the MES and is configured to read the VIN information of the vehicle from the MES.

In some embodiments, the TBox module is in communication with the diagnostic apparatus or the MES over a CAN bus to acquire the VIN information of the vehicle.

In some embodiments, the system for acquiring the vehicle information further includes a TSP module, wherein the TSP module is in communication with the central control screen, the in-vehicle infotainment, and the TBox module, and the TSP module is in communication with the mobile terminal module to achieve data transmission interaction between the mobile terminal module and the vehicle.

In some embodiments, the mobile terminal module is a mobile phone or a tablet, vehicle management APP is disposed on the mobile terminal module, and the mobile terminal module is configured to scan the two-dimensional code through the vehicle management APP and input the vehicle information to bind the vehicle.

In some embodiments, the in-vehicle infotainment is in communication with the TBox module via a high speed data HSD line, an ICCID and an SN is pre-stored in the TBox module, and the TBox module acquire the ICCID and the SN in response to a "vehicle information" request instruction on the central control screen.

In some embodiments, the central control screen is a touch screen, the central control screen acquires the ICCID and the SN of the TBox module and the VIN information of the vehicle, determines the ICCID and the SN of the TBox module and the VIN information of the vehicle as factors, and generates a two-dimensional code using a built-in two-dimensional code generation tool.

In the present disclosure, a method for acquiring vehicle information is provided. The method for acquiring the vehicle information is applicable to the above system for acquiring the vehicle information. The method includes:
a central control screen acquiring a vehicle information request instruction in response to a specific operation on the central control screen of a vehicle by a user;
an in-vehicle infotainment acquiring vehicle information of the vehicle and generating a corresponding two-dimensional code using a two-dimensional code generation tool disposed in the in-vehicle infotainment;
the central control screen acquiring and displaying the two-dimensional code; and
the mobile terminal module inputting the vehicle information by scanning the two-dimensional code and binding the vehicle based on the vehicle information.

In some embodiments, the vehicle information includes information of a telematics box TBox module, wherein the information of the TBox module is pre-stored in the TBox module; and
the in-vehicle infotainment acquiring the vehicle information of the vehicle includes:
the in-vehicle infotainment receiving the information of the TBox module transmitted by the TBox module via a high speed data HSD line, wherein the information of the TBox module includes at least one of an integrated circuit card identity ICCID and a serial number SN.

In some embodiments, the vehicle information further includes a vehicle identification number VIN; and
the in-vehicle infotainment acquiring the vehicle information of the vehicle further includes:
the TBox module reading the VIN from a diagnostic apparatus or a manufacturing execution system MES, and the in-vehicle infotainment acquiring the VIN from the TBox module.

In some embodiments, the TBox module is in communication with the diagnostic apparatus or the MES over a controller area network CAN.

In some embodiments, the in-vehicle infotainment is in communication with the TBox module via the high speed data HSD line, the information of the TBox module is pre-stored in the TBox module, and the TBox module is configured to acquire, in response to the vehicle information request instruction on the central control screen, the information of the TBox module.

In some embodiments, the vehicle information further includes a VIN, the vehicle is in communication with a diagnostic apparatus, and
the in-vehicle infotainment acquiring the vehicle information of the vehicle further includes:
the in-vehicle infotainment acquiring the VIN from the diagnostic apparatus.

In some embodiments, the vehicle information further includes a VIN, the vehicle is in communication with an MES, and
the in-vehicle infotainment acquiring the vehicle information of the vehicle further includes:
the in-vehicle infotainment acquiring the VIN from the MES.

In some embodiments, the in-vehicle infotainment acquiring the vehicle information of the vehicle further includes:
the in-vehicle infotainment acquiring the vehicle information from the central control screen.

In some embodiments, the vehicle information includes information of a TBox module, the central control screen is in communication with the TBox module, the central control screen acquires the information of the TBox module from the TBox module, wherein the information of the TBox module includes at least one of an ICCID and an SN.

In some embodiments, the vehicle information further includes a VIN, wherein the TBox module reads the VIN from the diagnostic apparatus or the MES, and the central control screen acquires the VIN from the TBox module.

In some embodiments, the vehicle information further includes a VIN, wherein the central control screen is in communication with a diagnostic apparatus, and reads the VIN from the diagnostic apparatus.

In some embodiments, the vehicle information further includes a VIN, wherein the central control screen is in communication with an MES, and reads the VIN from the MES.

In some embodiments, the mobile terminal module is a mobile phone or a tablet, an application APP for vehicle management is installed and run on the mobile terminal module, and the mobile terminal module is configured to scan the two-dimensional code through the APP for vehicle management and input the vehicle information.

In the present disclosure, a method for acquiring vehicle information is provided. The method for acquiring the vehicle information is applicable to the above system for acquiring the vehicle information. The method includes:
S1, a user clicking and acquiring a "vehicle information" request instruction on a central control screen;
S1, a TBox module reading VIN information of a vehicle from a diagnostic apparatus or an MES;
S3, the TBox module transmitting an ICCID and an SN of the TBox module and the VIN information of the vehicle to an in-vehicle infotainment via an HSD line;
S4, the in-vehicle infotainment acquiring the ICCID and the SN of the TBox module and the VIN information of the vehicle, and generating a corresponding two-dimensional code using a built-in two-dimensional code generation tool; and
S5, the central control screen displaying the two-dimensional code, and the user scanning the two-dimensional code by an APP in a mobile terminal module and inputting vehicle information to bind a vehicle.

In some embodiments, in S4, the central control screen acquiring the ICCID and the SN of the TBox module and the VIN information of the vehicle, and determining the ICCID and the code SN of the TBox module and the VIN information of the vehicle as factors, and generates a two-dimensional code using a built-in two-dimensional code generation tool.

In the present disclosure, a vehicle is provided. The vehicle includes the above system for acquiring the vehicle information, and the system for acquiring the vehicle information is configured to perform the above method for acquiring the vehicle information.

In the technical solutions of the present disclosure, the in-vehicle infotainment acquires vehicle information and generates the two-dimensional code based on the vehicle information. The two-dimensional code is displayed on the central control screen, such that the mobile terminal module acquires the vehicle information by scanning the two-dimensional code, inputs the vehicle information, and binds the vehicle. Thus, the mobile terminal module can simply and quickly acquire the vehicle information without manually inputting the vehicle information by the user, such that the operation of the user is simplified, and an efficiency of acquiring the vehicle information is improved. Furthermore, an efficiency of binding the vehicle is improved, and user experience is improved.

### BRIEF DESCRIPTION OF DRAWINGS

The present disclosure is further described in detail in conjunction with the accompanying drawings and the embodiments.
FIG. 1 is a frame diagram of a system for acquiring vehicle information according to some embodiments of the present disclosure;
FIG. 2 is a frame diagram of a system for acquiring vehicle information according to some embodiments of the present disclosure;
FIG. 3 is a flowchart of a method for acquiring vehicle information according to some embodiments of the present disclosure; and
FIG. 4 is a flowchart of a method for acquiring vehicle information according to some embodiments of the present disclosure.

### DETAILED DESCRIPTION OF THE INVENTION

It should be noted that the embodiments of the present disclosure and features in the embodiments can be combined without conflict. The present disclosure is described in detail with reference to the accompanying drawings and embodiments hereinafter.

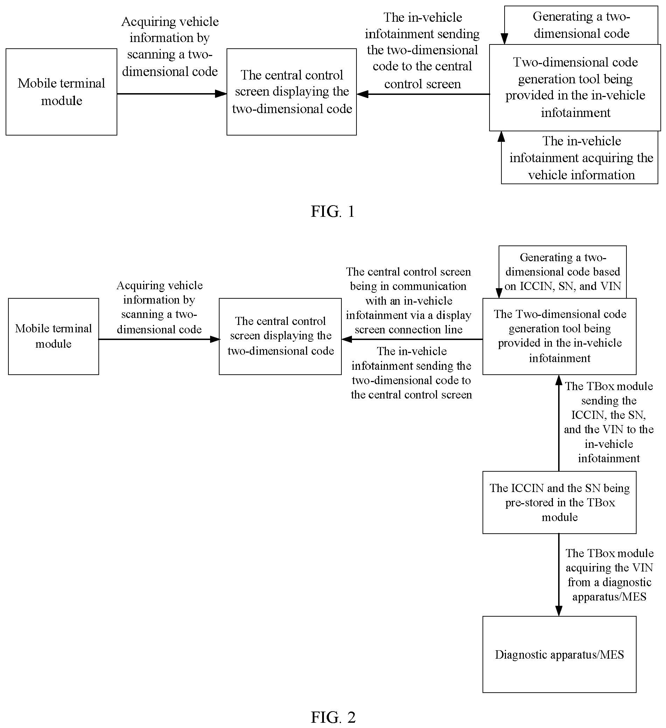

FIG. 1 is a frame diagram of a system for acquiring vehicle information according to some embodiments of the present disclosure. The system for acquiring the vehicle information is disposed in a current telematics control system to input the vehicle information. Then, the vehicle is bound based on the input vehicle information. In some embodiments, the system for acquiring the vehicle information includes a mobile terminal module, a central control screen, and an in-vehicle infotainment.

The in-vehicle infotainment and the central control screen are two portions of a vehicle-mounted terminal of a vehicle. The in-vehicle infotainment is a control portion of the vehicle-mounted terminal of the vehicle, and the central control screen is a display portion of the vehicle-mounted terminal of the vehicle. Alternatively, the in-vehicle infotainment and the central control screen are two separated devices, which is not limited in the present disclosure.

In some embodiments, a two-dimensional code generation tool is provided in the in-vehicle infotainment. The two-dimensional code generation tool is configured to generate a two-dimensional code. The in-vehicle infotainment is configured to acquire vehicle information and generate a corresponding two-dimensional code using the two-dimensional code generation tool.

In some embodiments, the central control screen is in communication with the in-vehicle infotainment, and is configured to acquire and display the two-dimensional code.

The mobile terminal module is configured to acquire the vehicle information by scanning the two-dimensional code and bind a vehicle based on the vehicle information.

In some embodiments, the central control screen is in communication with the in-vehicle infotainment via a display screen connection line.

In some embodiments, the system for acquiring the vehicle information further includes a telematics box (TBox) module. Information of the TBox module is pre-stored in the TBox module. The information of the TBox module includes at least one of an integrated circuit card identity (ICCID) and a serial number (SN).

The in-vehicle infotainment acquires the information of the TBox module in response to inclusion of the information of the TBox module in the vehicle information in the following two manners.

In a first manner, the in-vehicle infotainment is configured to acquire the information of the TBox module from the TBox module.

In some embodiments, the in-vehicle infotainment is in communication with the TBox module, and is configured to acquire the information of the TBox module from the TBox module. For example, the in-vehicle infotainment is in communication with the TBox module via a high speed data (HSD) line, and the in-vehicle infotainment is configured to receive the information of the TBox module transmitted by the TBox module via the HSD line.

The TBox module acquires the information of the TBox module in response to a vehicle information request instruction on the central control screen. The information of the TBox module is then sent to the in-vehicle infotainment.

In a second manner, the in-vehicle infotainment is configured to acquire the information of the TBox module from the central control screen.

In some embodiments, the central control screen is in communication with the TBox module, and is configured to acquire the information of the TBox module from the TBox module. The central control screen is in communication with the in-vehicle infotainment, and is configured to send the acquired information of the TBox module to the in-vehicle infotainment, that is, the in-vehicle infotainment acquires the information of the TBox module. For example, the central control screen is in communication with the TBox module via the HSD line, and the central control screen is in communication with the in-vehicle infotainment via the display screen connection line.

It should be noted that the in-vehicle infotainment acquires the information of the TBox module in the above first manner or in the above second manner, which is not limited in the embodiments of the present disclosure.

In some embodiments, the vehicle information further includes a vehicle identification number (VIN). The in-vehicle infotainment acquires the VIN in the following four manners.

In a first manner, the in-vehicle infotainment is configured to acquire the VIN from the TBox module.

In some embodiments, the system for acquiring the vehicle information further includes a diagnostic apparatus. The VIN is stored in the diagnostic apparatus, and the TBox module is in communication with the diagnostic apparatus. The TBox module is configured to read the VIN from the diagnostic apparatus. The in-vehicle infotainment is in communication with the TBox module, and is configured to acquire the VIN from the TBox module.

In some embodiments, the system for acquiring the vehicle information further includes a manufacturing execution system (MES). The VIN is stored in the MES, and the TBox module is in communication with the MES. The TBox module is configured to read the VIN from the MES. The in-vehicle infotainment is in communication with the TBox module, and is configured to acquire the VIN from the TBox module.

In some embodiments, the TBox module is in communication with the diagnostic apparatus or the MES over a controller area network (CAN).

In a second manner, the in-vehicle infotainment is configured to acquire the VIN from the diagnostic apparatus.

In some embodiments, the system for acquiring the vehicle information further includes the diagnostic apparatus, and the VIN is stored in the diagnostic apparatus. The in-vehicle infotainment is in communication with the diagnostic apparatus, and is configured to read the VIN from the diagnostic apparatus. In some embodiments, the in-vehicle infotainment is in communication with the diagnostic apparatus over the CAN.

In a third manner, the in-vehicle infotainment is configured to acquire the VIN from the MES.

In some embodiments, the system for acquiring the vehicle information further includes the MES, and the VIN is stored in the MES. The in-vehicle infotainment is in communication with the MES, and is configured to read the VIN from the MES. In some embodiments, the in-vehicle infotainment is in communication with the MES via the CAN.

In a fourth manner, the in-vehicle infotainment is configured to acquire the VIN from the central control screen.

In some embodiments, the central control screen is configured to acquire the VIN. The in-vehicle infotainment is configured to acquire the VIN from the central control screen. In some embodiments, the central control screen is a touch screen.

The central control screen acquires the VIN in the following three manners.

In a first manner, the central control screen is configured to acquire the VIN from the TBox module.

In some embodiments, the TBox module acquires the VIN, the TBox module is in communication with the central control screen, and the central control screen is configured to acquire the VIN from the TBox module.

The system for acquiring the vehicle information further includes the diagnostic apparatus, and the TBox module is in communication with the diagnostic apparatus and is configured to read the VIN from the diagnostic apparatus. Alternatively, the system for acquiring the vehicle information further includes the MES, and the TBox module is in communication with the MES and is configured to read the VIN from the MES. In some embodiments, the TBox module is in communication with the diagnostic apparatus or the MES over the CAN, and the central control screen is in communication with the TBox module over the CAN.

In a second manner, the central control screen is configured to acquire the VIN from the diagnostic apparatus.

In some embodiments, the system for acquiring the vehicle information further includes the diagnostic apparatus, the VIN is stored in the diagnostic apparatus, and the central control screen is in communication with the diagnostic apparatus. The central control screen is configured to acquire the VIN from the diagnostic apparatus. In some embodiments, the central control screen is in communication with the diagnostic apparatus over the CAN.

In a third manner, the central control screen is configured to acquire the VIN from the MES.

In some embodiments, the system for acquiring the vehicle information further includes the MES, the VIN is stored in the MES, and the central control screen is in communication with the MES. The central control screen is configured to acquire the VIN from the MES. In some embodiments, the central control screen is in communication with the MES over the CAN.

It should be noted that the central control screen acquires the VIN in any one of the above three manners, which is not limited in the embodiments of the present disclosure.

It should be further noted that the in-vehicle infotainment acquires the VIN in any one of the above four manners, which is not limited in the embodiments of the present disclosure.

In some embodiments, upon sending of the vehicle information by the central control screen to the in-vehicle infotainment, the in-vehicle infotainment determines the vehicle information as factors, and the two-dimensional code is generated.

FIG. 2 is a frame diagram of a system for acquiring vehicle information according to some embodiments of the present disclosure. In FIG. 2, the system for acquiring vehicle information includes a mobile terminal module, a central control screen, an in-vehicle infotainment, a TBox module, and a diagnostic apparatus/MES. The vehicle information includes ICCID, SN, and VIN. The TBox module is configured to acquire the VIN from the diagnostic apparatus or MES. The ICCID and the SN is pre-stored in the TBox module, and the TBox module is configured to send the ICCID, the SN, and the VIN to the in-vehicle infotainment. A two-dimensional code generation tool is predetermined in the in-vehicle infotainment. The in-vehicle infotainment is configured to receive the ICCID, the SN, and the VIN from the TBox module, and generate the two-dimensional code based on the ICCID, the SN, and the VIN. The in-vehicle infotainment is in communication with the central control screen via a display screen connection line, and is configured to send the two-dimensional code to the central control screen. The central control screen is configured to receive the two-dimensional code from the in-vehicle infotainment and display the two-dimensional code. The mobile terminal module is configured to acquire the vehicle information by scanning the two-dimensional code and bind a vehicle based on the vehicle information.

In some embodiments, the system for acquiring the vehicle information further includes a telematics service provider (TSP) module. The TSP module is in communication with the central control screen, the in-vehicle infotainment, and the TBox module. The TSP module is further in communication with the mobile terminal module, and is configured for data transmission interaction between the mobile terminal module and the vehicle.

The TSP module is configured to input and manage various contents and services and provide the data transmission interaction between the user equipment and the vehicle, which facilitates the user to acknowledge the vehicle, and improves the dependence of the user on vehicle brand in use. The TSP module is capable of combining more vehicle information to display the vehicle information in a form of dynamic two-dimensional code.

The mobile terminal module in the system for acquiring the vehicle information is a mobile phone or a tablet, an application (APP) for vehicle management is installed and run on the mobile terminal module, and the mobile terminal module is configured to scan the two-dimensional code through the APP for vehicle management and input the vehicle information. The APP for vehicle management is an APP of any type, which is not limited in the embodiments of the present disclosure.

Based on above solutions, the in-vehicle infotainment acquires vehicle information and generates the two-dimensional code based on the vehicle information. The two-dimensional code is displayed on the central control screen, such that the mobile terminal module acquires the vehicle information by scanning the two-dimensional code, inputs the vehicle information, and binds the vehicle. Thus, the mobile terminal module can simply and quickly acquire the vehicle information without manually inputting the vehicle information by the user, such that the operation of the user is simplified, and an efficiency of acquiring the vehicle information is improved. Furthermore, an efficiency of binding the vehicle is improved, and the user experience is improved.

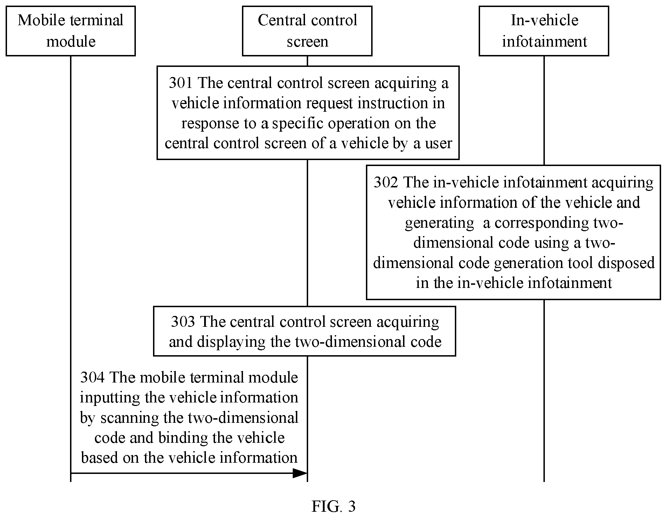

Accordingly, in conjunction with the above system for acquiring the vehicle information, FIG. 3 is a flowchart of a method for acquiring vehicle information according to some embodiments of the present disclosure. The method for acquiring the vehicle information is applicable to the above system for acquiring the vehicle information. The method includes the following processes.

In S301, a central control screen acquires a vehicle information request instruction in response to a specific operation on the central control screen of a vehicle by a user.

In some embodiments, the central control screen displays a vehicle information acquiring control, and the specific operation on the central control screen of the vehicle by the user is a click operation on the vehicle information acquiring control displayed on the central control screen of the vehicle by the user, a voice control operation, or other operation. The manner of the specific operation is not limited in the embodiments of the present disclosure.

In S302, an in-vehicle infotainment acquires vehicle information of the vehicle and generates a corresponding two-dimensional code using a two-dimensional code generation tool disposed in the in-vehicle infotainment.

In some embodiments, the vehicle information includes information of a telematics box (TBox) module. The information of the TBox module is pre-stored in the TBox module, and includes at least one of an integrated circuit card identity (ICCID) and a serial number (SN) of the TBox module. The in-vehicle infotainment acquires the information of the TBox module in the following two manners.

In a first manner, the in-vehicle infotainment acquires the information of the TBox module from the TBox module.

In some embodiments, the in-vehicle infotainment is in communication with the TBox module, and acquires the information of the TBox module from the TBox module. For example, the in-vehicle infotainment is in communication with the TBox module via a high speed data (HSD) line, and the in-vehicle infotainment receives the information of the TBox module transmitted by the TBox module via the HSD line. The TBox module acquires the information of the TBox module in response to a vehicle information request instruction on the central control screen.

In a second manner, the in-vehicle infotainment acquires the information of the TBox module from the central control screen.

In some embodiments, the central control screen is in communication with the TBox module, and acquires the information of the TBox module from the TBox module. The central control screen is in communication with the in-vehicle infotainment, and sends the acquired information of the TBox module to the in-vehicle infotainment, that is, the in-vehicle infotainment acquires the information of the TBox module. For example, the in-vehicle infotainment is in communication with the central control screen via a display screen connection line.

It should be noted that the in-vehicle infotainment acquires the information of the TBox module in the above first manner or in the above second manner, which is not limited in the embodiments of the present disclosure.

In some embodiments, the vehicle information further includes a vehicle identification number (VIN). The in-vehicle infotainment acquires the VIN in the following four manners.

In a first manner, the in-vehicle infotainment acquires the VIN from the TBox module.

In some embodiments, the VIN is stored in a diagnostic apparatus. The TBox module is in communication with the diagnostic apparatus, and the TBox module reads the VIN from the diagnostic apparatus. The in-vehicle infotainment is in communication with the TBox module, and acquires the VIN from the TBox module.

In some embodiments, the VIN is stored in a manufacturing execution system (MES), and the TBox module is in communication with the MES. The TBox module reads the VIN from the MES. The in-vehicle infotainment is in communication with the TBox module, and acquires the VIN from the TBox module.

In some embodiments, the TBox module is in communication with the diagnostic apparatus or the MES over a controller area network (CAN).

In a second manner, the in-vehicle infotainment acquires the VIN from the diagnostic apparatus.

In some embodiments, the VIN is stored in the diagnostic apparatus. The in-vehicle infotainment is in communication with the diagnostic apparatus, and reads the VIN from the diagnostic apparatus. In some embodiments, the in-vehicle infotainment is in communication with the diagnostic apparatus over the CAN.

In a third manner, the in-vehicle infotainment acquires the VIN from the MES.

In some embodiments, the VIN is stored in the MES. The in-vehicle infotainment is in communication with the MES, and acquires the VIN from the MES. In some embodiments, the in-vehicle infotainment is in communication with the MES via the CAN.

In a fourth manner, the in-vehicle infotainment acquires the VIN from the central control screen.

In some embodiments, the central control screen acquires the VIN. The central control screen sends the VIN to the in-vehicle infotainment, that is, the in-vehicle infotainment acquires the VIN. In some embodiments, the central control screen acquires the VIN in the following three manners.

In a first manner, the central control screen acquires the VIN from the TBox module.

In some embodiments, the TBox module acquires the VIN, the TBox module is in communication with the central control screen, and the central control screen acquires the VIN from the TBox module.

The TBox module is in communication with the diagnostic apparatus and acquires the VIN from the diagnostic apparatus. Alternatively, the TBox module is in communication with the MES and acquires the VIN from the MES.

In some embodiments, the TBox module is in communication with the diagnostic apparatus or the MES over the CAN, and the central control screen is in communication with the TBox module over the CAN.

In a second manner, the central control screen acquires the VIN from the diagnostic apparatus.

In some embodiments, the central control screen is in communication with the diagnostic apparatus. The central control screen acquires the VIN from the diagnostic apparatus. In some embodiments, the central control screen is in communication with the diagnostic apparatus over the CAN.

In a third manner, the central control screen acquires the VIN from the MES.

In some embodiments, the central control screen is in communication with the MES. The central control screen acquires the VIN from the MES. In some embodiments, the central control screen is in communication with the MES over the CAN.

It should be noted that the central control screen acquires the VIN in any one of the above three manners, which is not limited in the embodiments of the present disclosure.

It should be further noted that the in-vehicle infotainment acquires the VIN in any one of the above four manners, which is not limited in the embodiments of the present disclosure.

In some embodiments, a two-dimensional code generation tool is disposed in the in-vehicle infotainment. Upon acquisition of the vehicle information by the in-vehicle infotainment, the vehicle information is determined as the factors, and the two-dimensional code is generated using the two-dimensional code generation tool.

In S303, the central control screen acquires and displays the two-dimensional code.

In some embodiments, as the in-vehicle infotainment is in communication with the central control screen via the display screen connection line, upon generation of the two-dimensional code by the in-vehicle infotainment, the in-vehicle infotainment sends the two-dimensional code to the central control screen via the display screen connection line, and the central control screen receives the two-dimensional code from the in-vehicle infotainment and displays the two-dimensional code.

In S304, the mobile terminal module inputs the vehicle information by scanning the two-dimensional code and binds the vehicle based on the vehicle information.

In some embodiments, the mobile terminal module is a mobile phone or a tablet, for example, an iPad, and an application (APP) for vehicle management is installed and run on the mobile terminal module. The mobile terminal module scans the two-dimensional code through the APP for vehicle management, inputs the vehicle information, and then binds the vehicle based on the vehicle information. The APP for vehicle management is an APP of any type, which is not limited in the embodiments of the present disclosure.

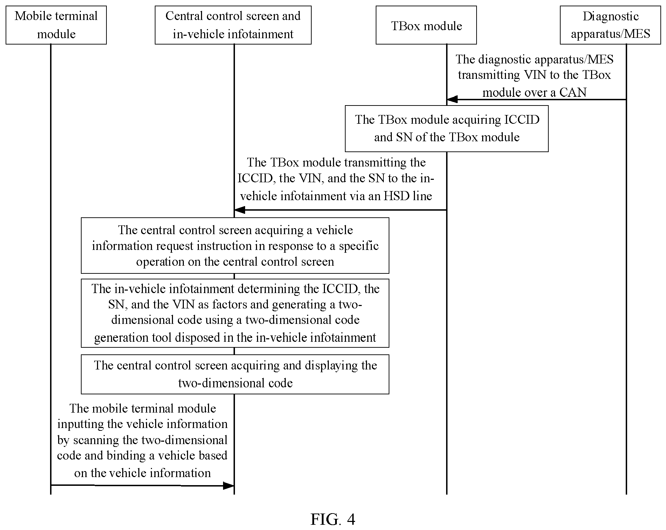

FIG. 4 is a flowchart of a method for acquiring vehicle information according to some embodiments of the present disclosure. In FIG. 4, the in-vehicle infotainment and the central control screen are two portions of a vehicle-mounted terminal of a vehicle, and the vehicle information includes ICCID, SN, and VIN. The process is as follows. The diagnostic apparatus/MES transmits the VIN to the TBox module over the CAN. The TBox module acquires the ICCID and the SN of the TBox module, and transmits the ICCID, the SN, and the VIN to the in-vehicle infotainment via an HSD line. In response to the specific operation received by the central control screen, the central control screen acquires the vehicle information request instruction. The in-vehicle infotainment determines the ICCID, the SN, and the VIN as the factors and generates the two-dimensional code using the two-dimensional code generation tool. The central control screen acquires and displays the two-dimensional code. The mobile terminal module inputs the vehicle information by scanning the two-dimensional code, and binds the vehicle based on the vehicle information.

Based on above solutions, the in-vehicle infotainment acquires vehicle information and generates the two-dimensional code based on the vehicle information. The two-dimensional code is displayed on the central control screen, such that the mobile terminal module acquires the vehicle information by scanning the two-dimensional code, inputs the vehicle information, and binds the vehicle. Thus, the mobile terminal module can simply and quickly acquire the vehicle information without manually inputting the vehicle information by the user, such that the operation of the user is simplified, and an efficiency of acquiring the vehicle information is improved. Furthermore, an efficiency of binding the vehicle is improved, and user experience is improved.

Accordingly, in conjunction with the above solutions, a vehicle is further provided in the embodiments of the present disclosure. The vehicle includes the above system for acquiring the vehicle information, and the system for acquiring the vehicle information is configured to perform the above method for acquiring the vehicle information.

Described above are merely exemplary embodiments of the present disclosure, and are not intended to limit the present disclosure in any form. Without departing from the scope of the technical solutions of the present disclosure, the technical contents described above can be changed and modified to the technical solutions of the present disclosure, or modified to equivalent embodiments with equivalent changes by those skilled in the art. Thus, any modifications, equivalent changes, and versions without departing from the contents of the technical solutions of the present disclosure should be encompassed within the scope of protection of the present disclosure.

## Claims

1. A system for acquiring vehicle information, comprising: a mobile terminal module, a central control screen, and an in-vehicle infotainment; wherein
a two-dimensional code generation tool is provided in the in-vehicle infotainment, and the in-vehicle infotainment is configured to acquire vehicle information and generate a corresponding two-dimensional code using the two-dimensional code generation tool;
the central control screen is in communication with the in-vehicle infotainment, and is configured to acquire and display the two-dimensional code; and
the mobile terminal module is configured to acquire the vehicle information by scanning the two-dimensional code and bind a vehicle based on the vehicle information.

2. The system for acquiring the vehicle information according to claim 1, further comprising: a telematics box TBox module; wherein the vehicle information comprises information of the TBox module, and the in-vehicle infotainment is in communication with the TBox module and is configured to acquire the information of the TBox module from the TBox module, wherein the information of the TBox module comprises at least one of an integrated circuit card identity ICCID and a serial number SN.

3. The system for acquiring the vehicle information according to claim 2, wherein the vehicle information further comprises a vehicle identification number VIN,
the system for acquiring the vehicle information further comprises a diagnostic apparatus, and the TBox module is in communication with the diagnostic apparatus and is configured to read the VIN from the diagnostic apparatus; or
the system for acquiring the vehicle information further comprises a manufacturing execution system MES, and the TBox module is in communication with the MES and is configured to read the VIN from the MES; and
the in-vehicle infotainment is further configured to acquire the VIN from the TBox module.

4. The system for acquiring the vehicle information according to claim 3, wherein the TBox module is in communication with the diagnostic apparatus or the MES over a controller area network CAN.

5. The system for acquiring the vehicle information according to claim 2, wherein the in-vehicle infotainment is in communication with the TBox module via a high speed data HSD line, the information of the TBox module is pre-stored in the TBox module, and the TBox module is configured to acquire, in response to a vehicle information request instruction on the central control screen, the information of the TBox module.

6. The system for acquiring the vehicle information according to claim 2, wherein the vehicle information further comprises a VIN, and the system for acquiring the vehicle information further comprises a diagnostic apparatus, wherein the in-vehicle infotainment is in communication with the diagnostic apparatus and is configured to read the VIN from the diagnostic apparatus.

7. The system for acquiring the vehicle information according to claim 2, wherein the vehicle information further comprises a VIN, and the system for acquiring the vehicle information further comprises an MES, wherein the in-vehicle infotainment is in communication with the MES and is configured to read the VIN from the MES.

8. The system for acquiring the vehicle information according to claim 1, wherein the central control screen is a touch screen, and is configured to acquire the vehicle information and send the vehicle information to the in-vehicle infotainment.

9. The system for acquiring the vehicle information according to claim 8, further comprising a TBox module, wherein the vehicle information comprises information of the TBox module, the central control screen is in communication with the TBox module and is configured to acquire the information of the TBox module from the TBox module, wherein the information of the TBox module comprises at least one of an ICCID and an SN.

10. The system for acquiring the vehicle information according to claim 9, wherein the vehicle information further comprises a VIN;
the system for acquiring the vehicle information further comprises a diagnostic apparatus, and the TBox module is in communication with the diagnostic apparatus and is configured to read the VIN from the diagnostic apparatus; or
the system for acquiring the vehicle information further comprises an MES, and the TBox module is in communication with the MES and is configured to read the VIN from the MES; and
the central control screen is further configured to acquire the VIN from the TBox module.

11. The system for acquiring the vehicle information according to claim 9, wherein the vehicle information further comprises a VIN, and the system for acquiring the vehicle information further comprises a diagnostic apparatus, wherein the central control screen is in communication with the diagnostic apparatus and is configured to read the VIN from the diagnostic apparatus.

12. The system for acquiring the vehicle information according to claim 9, wherein the vehicle information further comprises a VIN, and the system for acquiring the vehicle information further comprises an MES, wherein the central control screen is in communication with the MES and is configured to read the VIN from the MES.

13. The system for acquiring the vehicle information according to claim 2, further comprising a telematics service provider TSP module, wherein the TSP module is in communication with the central control screen, the in-vehicle infotainment, the TBox module, and the mobile terminal module, and is configured for data transmission interaction between the mobile terminal module and the vehicle.

14. The system for acquiring the vehicle information according to any one of claims 1 to 13, wherein the mobile terminal module is a mobile phone or a tablet, an application APP for vehicle management is installed and run on the mobile terminal module, and the mobile terminal module is configured to scan the two-dimensional code through the APP for vehicle management and input the vehicle information.

15. A method for acquiring vehicle information, applicable to the system for acquiring the vehicle information as defined in any one of claims 1 to 14, the method comprising:
a central control screen acquiring a vehicle information request instruction in response to a specific operation on the central control screen of a vehicle by a user;
an in-vehicle infotainment acquiring vehicle information of the vehicle and generating a corresponding two-dimensional code using a two-dimensional code generation tool disposed in the in-vehicle infotainment;
the central control screen acquiring and displaying the two-dimensional code; and
the mobile terminal module inputting the vehicle information by scanning the two-dimensional code and binding the vehicle based on the vehicle information.

16. The method for acquiring the vehicle information according to claim 15, wherein
the vehicle information comprises information of a telematics box TBox module, wherein the information of the TBox module is pre-stored in the TBox module; and
the in-vehicle infotainment acquiring the vehicle information of the vehicle comprises: the in-vehicle infotainment receiving the information of the TBox module transmitted by
the TBox module via a high speed data HSD line, wherein the information of the TBox module comprises at least one of an integrated circuit card identity ICCID and a serial number SN.

17. The method for acquiring the vehicle information according to claim 16, wherein
the vehicle information further comprises a vehicle identification number VIN, and
the in-vehicle infotainment acquiring the vehicle information of the vehicle further comprises:
the TBox module reading the VIN from a diagnostic apparatus or a manufacturing execution system MES, and the in-vehicle infotainment acquiring the VIN from the TBox module.

18. The method for acquiring the vehicle information according to claim 17, wherein the TBox module is in communication with the diagnostic apparatus or the MES over a controller area network CAN.

19. The method for acquiring the vehicle information according to claim 16, wherein the in-vehicle infotainment is in communication with the TBox module via the high speed data HSD line, the information of the TBox module is pre-stored in the TBox module, and the TBox module is configured to acquire, in response to the vehicle information request instruction on the central control screen, the information of the TBox module.

20. The method for acquiring the vehicle information according to claim 16, wherein
the vehicle information further comprises a VIN, and the vehicle is in communication with a diagnostic apparatus; and
the in-vehicle infotainment acquiring the vehicle information of the vehicle further comprises:
the in-vehicle infotainment acquiring the VIN from the diagnostic apparatus.

21. The method for acquiring the vehicle information according to claim 16, wherein
the vehicle information further comprises a VIN, and the vehicle is in communication with an MES; and
the in-vehicle infotainment acquiring the vehicle information of the vehicle further comprises:
the in-vehicle infotainment acquiring the VIN from the MES.

22. The method for acquiring the vehicle information according to claim 15, wherein the in-vehicle infotainment acquiring the vehicle information of the vehicle further comprises:
the in-vehicle infotainment acquiring the vehicle information from the central control screen.

23. The method for acquiring the vehicle information according to claim 22, wherein the vehicle information comprises information of a TBox module, the central control screen is in communication with the TBox module, the central control screen acquires the information of the TBox module from the TBox module, wherein the information of the TBox module comprises at least one of an ICCID and an SN.

24. The method for acquiring the vehicle information according to claim 23, wherein the vehicle information further comprises a VIN, wherein the TBox module reads the VIN from a diagnostic apparatus or the MES, and the central control screen acquires the VIN from the TBox module.

25. The method for acquiring the vehicle information according to claim 23, wherein the vehicle information further comprises a VIN, wherein the central control screen is in communication with a diagnostic apparatus, and reads the VIN from the diagnostic apparatus.

26. The method for acquiring the vehicle information according to claim 23, wherein the vehicle information further comprises a VIN, wherein the central control screen is in communication with an MES, and reads the VIN from the MES.

27. The method for acquiring the vehicle information according to any one of claims 15 to 26, wherein the mobile terminal module is a mobile phone or a tablet, an application APP for vehicle management is installed and run on the mobile terminal module, and the mobile terminal module is configured to scan the two-dimensional code through the APP for vehicle management and input the vehicle information.

28. A vehicle, comprising: the system for acquiring the vehicle information as defined in any one of claims 1 to 14, and the system for acquiring the vehicle information is configured to perform the method for acquiring the vehicle information as defined in any one of claims 15 to 27.
